(19) Europäisches Patentamt
European Patent Office
Office européen des brevets

(11) EP 4 613 704 A1

(12) **EUROPEAN PATENT APPLICATION**
published in accordance with Art. 153(4) EPC

(43) Date of publication:
**10.09.2025 Bulletin 2025/37**

(21) Application number: **23885601.7**

(22) Date of filing: **25.10.2023**

(51) International Patent Classification (IPC):
***C01B 32/174*** *(2017.01)* ***C08K 3/04*** *(2006.01)*
***C08K 5/20*** *(2006.01)* ***C08L 1/26*** *(2006.01)*
***D01F 9/12*** *(2006.01)* ***H01M 4/62*** *(2006.01)*

(52) Cooperative Patent Classification (CPC):
**C01B 32/174; C08K 3/04; C08K 5/20; C08L 1/26; D01F 9/12; H01M 4/62;** Y02E 60/10

(86) International application number:
**PCT/JP2023/038425**

(87) International publication number:
**WO 2024/095843 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 JP 2022177289**

(71) Applicant: **DKS Co. Ltd.**
**Kyoto-shi, Kyoto 600-8873 (JP)**

(72) Inventors:
- **SOFUE, Ayano**
  **Kyoto-shi**
  **Kyoto 600-8873 (JP)**
- **NISHIKAWA, Akiyoshi**
  **Kyoto-shi**
  **Kyoto 600-8873 (JP)**

(74) Representative: **TBK**
**Bavariaring 4-6**
**80336 München (DE)**

(54) **CARBON NANOTUBE DISPERSED LIQUID, COMPOSITION FOR BATTERY ELECTRODES USING SAME, AND BATTERY**

(57) Carbon nanotube dispersibility and dispersion stability are improved.

A carbon nanotube dispersion liquid according to an embodiment includes a carbon nanotube; carboxymethyl cellulose and/or a salt thereof; water; and a compound represented by general formula (1) below. In formula (1), R represents a hydrogen atom or a methyl group.

[Chem. 1]

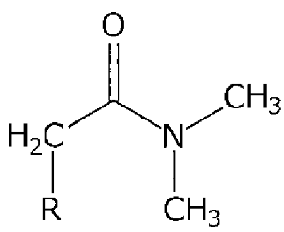

(1)

EP 4 613 704 A1

## Description

Technical Field

Embodiments of the present invention relate to a carbon nanotube dispersion liquid, a battery electrode composition using the same, and a battery using the same.

Background Art

Carbon nanotubes have excellent conductivity and are, therefore, used, for example, as a conductive agent that constitutes an electrode in a non-aqueous electrolyte secondary battery, such as a lithium-ion secondary battery. Carbon nanotubes, however, experience strong aggregation due to van der Waals forces and are, therefore, difficult to disperse uniformly in water.

A known approach for improving carbon nanotube dispersibility in water is to use, as a dispersing agent, carboxymethyl cellulose and/or a salt thereof. Patent Literature 1, for example, describes a fine carbon fiber dispersion liquid made of a fine carbon fiber, a dispersion medium, a polymer-based dispersing agent, and a basic compound having a pKa of 7.5 or greater. Specifically, Patent Literature 1 describes a carbon nanotube dispersion liquid prepared by mixing a carbon nanotube, which is the fine carbon fiber, a sodium salt of carboxymethyl cellulose, which is the dispersing agent, water, which is the dispersion medium, and monoethanolamine, which is the basic compound.

Citation List

Patent Literature

PTL 1: Japanese Unexamined Patent Application Publication No. 2014-181140

Summary of Invention

Technical Problem

Typically, individual carbon nanotubes are in the form of a dense bundle due to van der Waals forces, as described above, and, accordingly, uniformly dispersing them in water requires disassembling the bundle. However, disassembling the bundle to achieve uniform dispersion in water is difficult, and, therefore, improvement in dispersibility is needed. Furthermore, it is necessary to maintain the dispersed state; in other words, dispersion stability is needed.

An object of embodiments of the present invention is to provide a carbon nanotube dispersion liquid having improved carbon nanotube dispersibility and dispersion stability. Solution to Problem

The present invention includes the embodiments described below.

[1] A carbon nanotube dispersion liquid comprising a carbon nanotube; carboxymethyl cellulose and/or a salt thereof; water; and a compound represented by general formula (1) below:

[Chem. 1]

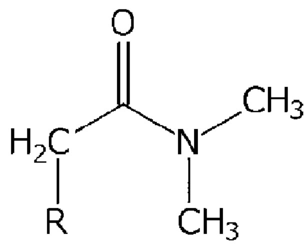

(1)

where R represents a hydrogen atom or a methyl group.

[2] The carbon nanotube dispersion liquid according to [1], wherein the carboxymethyl cellulose and/or the salt thereof have a degree of etherification of 0.60 to 0.85 and a 2 mass% aqueous solution viscosity at 25°C of 1 to 300 mPa·s.

[3] The carbon nanotube dispersion liquid according to [1] or [2], wherein a content of the compound is 1 to 30 moles per 100 g of the carbon nanotube.

[4] The carbon nanotube dispersion liquid according to any one of [1] to [3], wherein a ratio of an amount of the

carboxymethyl cellulose and/or the salt thereof to an amount of the carbon nanotube is 0.3 to 3.0 on a mass basis.

[5] The carbon nanotube dispersion liquid according to any one of [1] to [4], wherein a ratio of an amount of the compound to a total amount of the compound and the water is 0.005 to 0.1 on a mass basis.

[6] A battery electrode composition comprising the carbon nanotube dispersion liquid according to any one of [1] to [5].

[7] A battery electrode produced with the battery electrode composition according to [6].

[8] A battery comprising an electrode produced with the carbon nanotube dispersion liquid according to any one of [1] to [5].

Advantageous Effects of Invention

Embodiments of the present invention can have improved carbon nanotube dispersibility and dispersion stability.
Description of Embodiments

A carbon nanotube dispersion liquid according to an embodiment of the present invention includes (A) a carbon nanotube, (B) carboxymethyl cellulose and/or a salt thereof, (C) water, and (D) a compound represented by general formula (1).

[(A) Carbon Nanotube]

Carbon nanotubes are substances in which one or more **6-**membered networks (graphene sheet or sheets) constituted by carbon form a single layer or multiple coaxial layers. The carbon nanotube may be a single-wall carbon nanotube (SMCNT), which has a single-layer structure, or may be a multi-wall carbon nanotube (MWCNT), which has a multi-layer structure. Multi-wall carbon nanotubes include, in particular, a double-wall carbon nanotube (DWCNT), which has two layers. One or a combination of two or more of these may be used. In terms of achieving excellent cycle characteristics of a battery, it is preferable to use a single-wall carbon nanotube.

The carbon nanotube may be produced by any method, which may be any of a variety of production methods known in the art. Examples of the methods include pyrolysis methods that use a catalyst, arc discharge methods, laser ablation methods, and CVD methods, such as HiPco methods and CoMoCAT methods.

The carbon nanotube may have an average diameter (fiber diameter) of, for example and without limitation, 0.4 to 100 nm, 0.5 to 50 nm, or 1 to 20 nm. The carbon nanotube may have an average length of, for example and without limitation, 50 nm to 10 mm, 500 nm to 100 $\mu$m, or 1 to 50 $\mu$m. The carbon nanotube may have an aspect ratio (i.e., a ratio of the average length to the average diameter) of, for example and without limitation, 10 or greater or 100 or greater.

The average diameter and the average length of the carbon nanotube can be determined as follows: 50 individual carbon nanotubes are randomly selected in an atomic force microscope image, a size of the carbon nanotubes is measured, and an arithmetic mean of the measurements is calculated. For lengths on the order of mm that cannot be measured with an atomic force microscope, an image taken with a microscope can be used for the measurement.

In a preferred embodiment, the carbon nanotube includes a single-wall carbon nanotube. In this instance, the carbon nanotube may be formed of only the single-wall carbon nanotube or may include a multi-wall carbon nanotube in addition to the single-wall carbon nanotube. Specifically, a ratio of an amount of the single-wall carbon nanotube to a total amount of the one or more carbon nanotubes may be 80 mass% or greater. Preferably, the ratio is 95 mass% or greater, and more preferably 98 mass% or greater.

[(B) Carboxymethyl Cellulose and/or Salt Thereof]

Carboxymethyl cellulose and/or a salt thereof (hereinafter also referred to as "CMC") have a structure in which hydroxy groups in a glucose residue that constitutes the cellulose have been replaced with a carboxymethyl ether group. The CMC may be a CMC containing a carboxy group (-COOH) or a CMC in the form of a carboxylic acid salt. Both of these may be used in combination.

Examples of the salt of carboxymethyl cellulose include alkali metal salts, such as sodium salts, lithium salts, and potassium salts, alkaline earth metal salts, such as calcium salts and magnesium salts, and organic salts, such as ammonium salts, alkylamine salts, and alkanolamine salts. Only one of these salts may be included, or two or more of these salts may be included. Among these, alkali metal salts are preferable, and sodium salts are more preferable.

In this embodiment, preferably, the CMC to be used has a degree of etherification of 0.60 to 0.85 and a 2 mass% aqueous solution viscosity at 25°C of 1 to 300 mPa·s. Using a CMC having such a degree of etherification and such a 2 mass% aqueous solution viscosity can increase an effect of improving carbon nanotube dispersion stability.

The degree of etherification of the CMC is more preferably 0.65 to 0.85 and even more preferably 0.70 to 0.80. As disclosed herein, the degree of etherification of the CMC is measured in the following manner.

(Degree of Etherification)

0.6 g of the CMC is dried at 105°C for 4 hours. The mass of the dried product is accurately weighed, and subsequently, the dried product is wrapped in filter paper and ashed in a porcelain crucible. The ashed product is transferred to a 500-mL beaker, and 250 mL of water and 35 mL of a 0.05 mol/L aqueous solution of sulfuric acid are added thereto. Then, the contents are boiled for 30 minutes. After cooling, the excess acid is back-titrated with a 0.1 mol/L aqueous solution of potassium hydroxide (phenolphthalein is used as an indicator). The degree of etherification is calculated according to the equation below.

$$\text{Equation: (Degree of etherification)} = 162 \times A/(10000 - 80A)$$

$$A = (af - bf1)/\text{mass (g) of dried product}$$

A: an amount (mL) of the 0.05 mol/L aqueous solution of sulfuric acid consumed by bound alkali per gram of the sample
a: an amount (mL) of use of the 0.05 mol/L aqueous solution of sulfuric acid
f: a titer of the 0.05 mol/L aqueous solution of sulfuric acid
b: an amount (mL) of the 0.1 mol/L aqueous solution of potassium hydroxide for the titration
f1: a titer of the 0.1 mol/L aqueous solution of potassium hydroxide

The 2 mass% aqueous solution viscosity at 25°C of the CMC is more preferably 1 to 150 mPa·s and even more preferably 1 to 30 mPa·s. As disclosed herein, the 2 mass% aqueous solution viscosity of the CMC is measured in the following manner.

(2 mass% Aqueous Solution Viscosity)

The CMC is added to an Erlenmeyer flask, water is then added thereto to a concentration of 2 mass%, and the resultant is shaken for 30 seconds. After the resultant is left to stand for 12 hours, mixing is performed for 5 minutes to prepare a 2 mass% aqueous solution. The resulting aqueous solution is transferred to a tall beaker and adjusted to 25°C. The viscosity is measured with a B-type viscometer (single cylinder rotational viscometer) in accordance with JIS Z 8803:2011. The measurement is performed at a rotor rotational speed of 60 rpm. If the measurement upper limit is reached, the rotor rotational speed is changed to 30 rpm and to 12 rpm, progressively, to carry out the measurement.

[(D) Compound Represented by General Formula (1)]

In this embodiment, the compound represented by general formula (1) below (hereinafter also referred to as a "compound (1)") is used as the component (D), together with the CMC that is the component (B). The use of the compound (1) together with the CMC can improve carbon nanotube dispersibility and dispersion stability in water, and, therefore, if a battery is produced, the battery can have improved cycle characteristics. One non-limiting reason for this is believed to be as follows. The compound (1) penetrates into regions between individual carbon nanotubes, which are attracted to one another via van der Waals forces, and disassembles the carbon nanotube bundle, thereby dispersing the individual carbon nanotubes in water. Furthermore, it is believed that the CMC adsorbs onto the disassembled individual carbon nanotubes, thereby enabling the state in which the individual carbon nanotubes are dispersed to be maintained.

[Chem. 2]

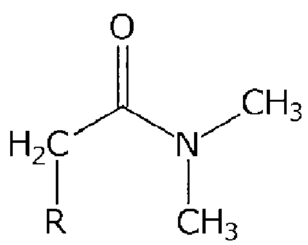

(1)

In formula (1), R represents a hydrogen atom or a methyl group.

Specifically, the compound (1) is N,N-dimethylacetamide (R=hydrogen atom) and/or N,N-dimethylpropionamide (R=methyl group). That is, the compound (1) may be one of these or a combination of both of these.

[Carbon Nanotube Dispersion Liquid]

The carbon nanotube dispersion liquid according to this embodiment includes the component (A), the component (B), and the component (D) and also includes water as the component (C). Thus, the carbon nanotube dispersion liquid is a dispersion liquid in which a carbon nanotube is dispersed in water. More specifically, the carbon nanotube dispersion liquid is a dispersion liquid made of an aqueous solution and the carbon nanotube that is the component (A), with the carbon nanotube being dispersed in the aqueous solution, in which the CMC that is the component (B) and the compound (1) that is the component (D) are dissolved because the CMC and the compound (1) are water-soluble.

In the carbon nanotube dispersion liquid, a content of the compound (1) may be 1 to 30 moles per 100 g of the carbon nanotube, which is preferable from the standpoint of increasing the effects of this embodiment; the content is more preferably 1.5 to 20 moles, even more preferably 2 to 15 moles, and still more preferably 5 to 12 moles.

In the carbon nanotube dispersion liquid, a ratio of an amount (B) of the CMC to an amount (A) of the carbon nanotube, denoted as B/A, may be 0.3 to 3.0 on a mass basis, which is preferable from the standpoint of enhancing the effects of the present embodiments; the ratio is more preferably 0.5 to 2.5, even more preferably 1.0 to 2.0, and still more preferably 1.1 to 1.8.

In the carbon nanotube dispersion liquid, a ratio of an amount (D) of the compound (1) to a total amount (C+D) of the compound (1) and the water, denoted as D/(C+D), is preferably 0.005 to 0.1, more preferably 0.01 to 0.08, and even more preferably 0.02 to 0.07, on a mass basis. When the mass ratio D/(C+D) is 0.005 or greater, the effect produced by adding the compound (1) can be increased, and when the mass ratio is 0.1 or less, a decrease in the solubility of the CMC in the water can be prevented.

In the carbon nanotube dispersion liquid, a ratio of the amount (D) of the compound (1) to the amount (B) of the CMC, denoted as D/B, is preferably 1 to 20 and more preferably 1.3 to 15, on a mass basis.

In the carbon nanotube dispersion liquid, a ratio of a total amount (B+D) of the CMC and the compound (1) to a total amount (A+B+D) of the carbon nanotube, the CMC, and the compound (1), denoted as (B+D)/(A+B+D), is preferably 0.60 to 0.98, more preferably 0.67 to 0.97, and even more preferably 0.77 to 0.96, on a mass basis.

The content of each of the components based on the total mass of the carbon nanotube dispersion liquid is not particularly limited. For example, the content of the carbon nanotube may be 0.01 to 5 mass%, 0.1 to 3 mass%, or 0.2 to 2 mass%. The content of the CMC may be 0.01 to 5 mass%, 0.1 to 3 mass%, or 0.2 to 2 mass%. The content of the compound (1) may be 0.5 to 12 mass%, 1 to 10 mass%, or 1.5 to 7 mass%. The content of the water may be 70 to 99 mass%, 80 to 98 mass%, or 90 to 97 mass%.

If necessary, the carbon nanotube dispersion liquid may include one or more other components, in addition to the components (A) to (D). For example, a water-soluble organic solvent that is water-miscible may be used as a dispersion medium together with the water that is the component (C). Examples of the water-soluble organic solvent include methanol, ethanol, propanol, butanol, methyl cellosolve, ethyl cellosolve, butyl cellosolve, acetone, N-methyl-2-pyrrolidone (NMP), and N,N-dimethylformamide (DMF). Furthermore, examples of other additives include conductive agents other than carbon nanotubes; water-soluble polymers other than CMCs; dispersing agents; surfactants; wetting agents; defoaming agents; and pH-adjusting agents.

The carbon nanotube dispersion liquid can be prepared by any method. For example, the carbon nanotube dispersion liquid can be prepared as follows: the components (A), (B), and (D) and the water that is the component (C) are mixed together, and the mixture is subjected to a dispersion treatment that uses a dispersion device, such as a homodisper, a high-pressure homogenizer, or an ultrasonic homogenizer. In an embodiment, the mixed liquid containing the components (A) to (D) may be subjected to a dispersion treatment while being circulated in a dispersion machine equipped with a circulation unit; the dispersion device used for the dispersion treatment may be a homogenizer or the like.

[Battery Electrode Composition]

The carbon nanotube dispersion liquid can be used as a coating material (coating material for electrodes) for producing an electrode of a battery, such as a non-aqueous electrolyte secondary battery. That is, a battery electrode composition according to embodiments includes the carbon nanotube dispersion liquid.

In an embodiment, the battery electrode composition is used to form an active material layer of an electrode that is to include a current collector and the active material layer formed on the current collector. Specifically, an electrode can be produced by coating the battery electrode composition onto a current collector and drying the composition. In this instance, the battery electrode composition includes an electrode active material together with the carbon nanotube dispersion liquid. In the active material layer, when the electrode active material undergoes swelling and shrinkage, contact points between particles of the active material are lost, and the carbon nanotube plays the role of providing a conductive path that

connects the particles of the active material to one another. In a non-aqueous electrolyte secondary battery, while the battery electrode composition may be used in a positive electrode, the battery electrode composition is preferably used in a negative electrode, that is, is used to form the active material layer of the negative electrode.

The electrode active material for the battery electrode composition may be a positive electrode active material or a negative electrode active material known in the art. It is preferable to use a negative electrode active material. Examples of the negative electrode active material include silicon-based negative electrode active materials and carbon-based active materials and also include metal materials, such as lithium metal, lithium alloys, and tin compounds, lithium transition-metal nitrides, crystalline metal oxides, amorphous metal oxides, and conductive polymers. These may be used alone or in a combination of two or more.

Examples of the silicon-based negative electrode active materials include silicon oxides (hereinafter referred to as "SiO") represented by $SiO_x$ ($0.5 \leq x \leq 1.6$) and silicon-containing compounds made of a lithium silicate phase represented by $Li_{2y}SiO_{(2+y)}$ ($0 < y < 2$) and Si microparticles dispersed therein. Examples of the carbon-based active materials include graphites, such as natural graphites, artificial graphites, non-graphitizable carbons, and graphitizable carbons.

In the battery electrode composition, a formulation amount of the carbon nanotube dispersion liquid is not particularly limited, and the content, in terms of the content of the carbon nanotube, may be 0.05 to 1.0 mass% or 0.07 to 0.5 mass% based on a total mass of the solids in the battery electrode composition. The content of the electrode active material (which is preferably a negative electrode active material) is also not particularly limited and may be 80 to 98 mass% or 90 to 97 mass% based on the total mass of the solids in the battery electrode composition. The content of the silicon-based active material is also not particularly limited and may be 10 to 90 mass% or 15 to 35 mass% based on the total mass of the solids in the battery electrode composition.

If necessary, the battery electrode composition may include any of a variety of components together with the carbon nanotube dispersion liquid and the electrode active material. Examples of such components include conductive agents other than carbon nanotubes; binding agents; thickening agents; dispersing agents; defoaming agents; leveling agents; and solvents (e.g., water).

The conductive agent other than carbon nanotubes is not particularly limited, and examples thereof include carbon blacks, such as acetylene black and Ketjen black. An amount of one or more conductive agents in the battery electrode composition is not particularly limited, and a total amount of the conductive agents, including the carbon nanotube, may be 0.1 to 5.0 mass% or 0.2 to 2.5 mass% based on the total mass of the solids in the battery electrode composition.

The binding agent (binder resin) is not particularly limited, and examples thereof include various types of resin emulsions, such as styrene-butadiene rubber (SBR) emulsions, polyurethane emulsions, polyvinyl acetate emulsions, and acrylic resin emulsions. The amount of the binding agent in the battery electrode composition is not particularly limited and may be 1.5 to 9.5 mass% or 2 to 4 mass% based on the total mass of the solids in the battery electrode composition.

The thickening agent is not particularly limited, and, for example, the same carboxymethyl cellulose and/or a salt thereof as the component (B) may be additionally added, or a CMC different from the component (B) may be separately added. The amount of the thickening agent in the battery electrode composition is not particularly limited and may be 0.05 to 3 mass% or 0.1 to 2 mass% based on the total mass of the solids in the battery electrode composition.

The current collector is not particularly limited as long as the current collector is an electronic conductor that does not produce negative effects in the constructed battery. For example, copper, stainless steel, nickel, aluminum, titanium, baked carbon, a conductive polymer, conductive glass, an Al-Cd alloy, or the like may be used. As another example, copper or the like that has been surface-treated with carbon, nickel, titanium, silver, or the like for the purpose of improving adhesion, conductivity, and oxidation resistance may be used. These current collectors may be those that have been surface-oxidized. A shape of the current collector may be a foil shape, a film shape, a sheet shape, or a mesh shape, or the current collector may be a formed material, such as a perforated or expanded material, a lath material, a porous material, or a foamed material.

[Battery]

A battery according to an embodiment includes an electrode produced with the carbon nanotube dispersion liquid. The electrode may be a positive electrode or a negative electrode and is preferably a negative electrode. Preferably, the battery is a non-aqueous electrolyte secondary battery, such as a lithium-ion secondary battery.

In an embodiment, a non-aqueous electrolyte secondary battery includes a negative electrode, a positive electrode, an electrolyte, and a separator disposed between the negative electrode and the positive electrode, with the negative electrode and/or the positive electrode (preferably, the negative electrode) being an electrode produced with the battery electrode composition. In an embodiment, the non-aqueous electrolyte secondary battery may include a laminate formed of alternating layers of a positive electrode and a negative electrode with a separator disposed therebetween; a housing that houses the laminate; and an electrolyte, such as a non-aqueous electrolyte solution, injected into the housing.

The non-aqueous electrolyte may be, for example, a material in which a lithium salt serving as a supporting electrolyte has been dissolved in an organic solvent. Thus, a lithium-ion secondary battery can be formed.

EXAMPLES

The present invention will be described in more detail below with reference to Examples and Comparative Examples, to which the present invention is not limited.

Details of each of the components used in the Examples and the Comparative Examples are described below.

[Component (A)]

CNT-1: single-wall carbon nanotube (SWCNT); purity = 96.5 mass%, average diameter = 1.6 nm, average fiber length = 5 μm; Tuball Batt, manufactured by OCSiAl

CNT-2: multi-wall carbon nanotube (MWCNT); purity = 98 mass%, average diameter = 10 nm, average fiber length = 10 μm; FT9000, manufactured by Cnano Technology Ltd.

[Component (B)]

CMC-1: sodium salt of carboxymethyl cellulose; degree of etherification = 0.75, 2 mass% aqueous solution viscosity (25°C) = 18 mPa·s; Cerogen 7A, manufactured by DKS Co., Ltd.

CMC-2: sodium salt of carboxymethyl cellulose; degree of etherification = 0.68, 2 mass% aqueous solution viscosity (25°C) = 79 mPa·s; Cerogen PR, manufactured by DKS Co., Ltd.

CMC-3: sodium salt of carboxymethyl cellulose; degree of etherification = 0.73, 2 mass% aqueous solution viscosity (25°C) = 3 mPa·s; Cerogen 5A, manufactured by DKS Co., Ltd.

[Component (D)]

Compound D-1: N,N-dimethylacetamide (formula (D-1))

Compound D-2: N,N-dimethylpropionamide (formula (D-2))

[Others]

Compound D-3: N,N-dimethylformamide (formula (D-3))

Compound D-4: N-methylacetamide (formula (D-4))

Compound D-5: 3-methyl-2-butanone (formula (D-5))

Compound D-6: N,N-dimethylethylamine (formula (D-6))

[Chem. 3]

(D-1)

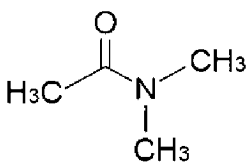

(D-2)

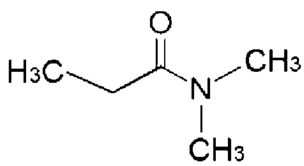

(D-3)

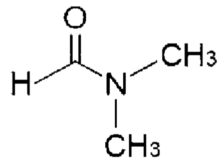

(D-4)

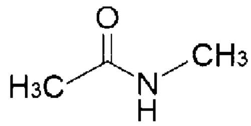

(D-5)

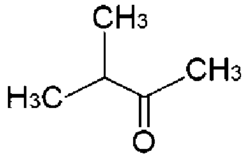

(D-6)

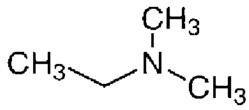

[Examples 1 to 10 and Comparative Examples 1 to 6]

Example 1 was carried out as follows. 0.40 g of CNT-1, 0.60 g of CMC-1, 3.13 g of compound D-1, and 95.87 g of water were added to a 200-mL beaker and mixed together by stirring with a stirrer (1000 rpm) for 12 hours. Subsequently, dispersion was performed on the mixed liquid while it was circulated, in an apparatus including an ultrasonic homogenizer (US-600T, manufactured by Nihonseiki Kaisha Ltd., equipped with a circulation unit) and a tube pump connected thereto. The dispersion was performed at an output of 70 μA for 60 minutes to give a carbon nanotube dispersion liquid.

In Examples 2 to 10 and Comparative Examples 1 to 6, carbon nanotube dispersion liquids were prepared as in Example 1, except that the type and the amount used of each of the components were changed as shown in Table 1.

In Table 1, "Amount of Compound D (mol/CNT 100g)" refers to the content (in moles) of Compounds D-1 to D-6 per 100 g of the carbon nanotube. "Mass Ratio B/A" refers to a ratio (mass ratio) of the amount (B) of the CMC to the amount (A) of the carbon nanotube. "Mass Ratio D/(C+D)" refers to a ratio (mass ratio) of the amount (D) of one of compounds D-1 to D-6 to the total amount (C+D) of the water and the one of compounds D-1 to D-6. "Mass Ratio D/B" refers to a ratio (mass ratio) of the amount (D) of one of compounds D-1 to D-6 to the amount (B) of the carboxymethyl cellulose and/or a salt thereof. "Mass Ratio (B+D)/(A+B+D)" refers to a ratio (mass ratio) of the total amount (B+D) of the carboxymethyl cellulose and/or a salt thereof and one of compounds D-1 to D-6 to the total amount (A+B+D) of the carbon nanotube, the carboxymethyl cellulose and/or a salt thereof, and the one of compounds D-1 to D-6.

The carbon nanotube dispersion liquids of Examples 1 to 10 and Comparative Examples 1 to 6 were evaluated for dispersibility, dispersion stability, viscosity, electrode coating properties, and battery performance (cycle characteristics). The evaluations were each performed in the following manner.

[Dispersibility]

The carbon nanotube dispersion liquid was diluted with water to achieve a content of the carbon nanotube of **0.1** mass%. Subsequently, a preparation thereof was produced, and remaining coarse particles were observed with an optical microscope (magnification: 35×). A size of aggregates present in a 5 $mm^2$ area that was observed was measured, and the carbon nanotube dispersibility was evaluated on a 5-point scale, described below, with the scores of 3 or more representing a **"pass".**

5: The number of aggregates with a size of less than **0.6** mm is 2 or less, the number of aggregates with a size of 0.6 mm or greater and less than 1 mm is 1 or less, and there are no aggregates with a size of 1 mm or greater.
4: The number of aggregates with a size of less than 0.6 mm is 3 or greater, the number of aggregates with a size of 0.6 mm or greater and less than 1 mm is 1 or less, and there are no aggregates with a size of 1 mm or greater.
3: The number of aggregates with a size of 0.6 mm or greater and less than 1 mm is 2 or greater, and there are no aggregates with a size of 1 mm or greater.
2: There are aggregates with a size of 1 mm or greater and less than 2 mm, and there are no aggregates with a size of 2 mm or greater.
1: There are aggregates with a size of 2 mm or greater.

[Dispersion Stability]

The carbon nanotube dispersion liquid was allowed to stand for 1 month, and thereafter, the carbon nanotube dispersion liquid was diluted by adding water thereto to achieve a content of the carbon nanotube of 0.001 mass%. Subsequently, an absorbance (A1) at a wavelength specific to a carbon nanotube was measured with an ultraviolet-visible spectrometer (model number: U-3900H, manufactured by Hitachi, Ltd.). Subsequently, centrifugation was performed for 80 minutes with a centrifuge (model number: CF16RN, manufactured by Himac Technologies Co., Ltd.) under the conditions of 5000 × g (in Example 4, 500 × g) and 25°C, and then, an absorbance (A2) of the supernatant liquid resulting from the centrifugation was measured in the same manner. A rate of change in the absorbance before and after the centrifugation was determined according to the following equation. The wavelength specific to a carbon nanotube was 503 nm, which is a wavelength specific to metallic carbon nanotubes. Higher values of the rate of change in the absorbance indicate a reduction in the centrifugation-induced settling of individual carbon nanotubes that aggregated with time and, therefore, indicate higher dispersion stability. The dispersion stability was evaluated on a 5-point scale, described below, with the scores of 3 or more representing a "pass".

Rate of change (%) in the absorbance before and after centrifugation = (A2/A1) × 100

5: The value of the rate of change in the absorbance is 82% or greater.
4: The value of the rate of change in the absorbance is 78% or greater and less than 82%.
3: The value of the rate of change in the absorbance is 74% or greater and less than 78%.
2: The value of the rate of change in the absorbance is 70% or greater and less than 74%.
1: The value of the rate of change in the absorbance is less than 70%.

[Viscosity]

The viscosity of the carbon nanotube dispersion liquid was measured with a B-type viscometer (TVB-10, manufactured by Toki Sangyo Co., Ltd.). The measurement was carried out under the conditions of 60 rpm and 25°C (3 minutes). The results of the evaluation of the viscosity were expressed on a 5-point scale, described below.

5: Less than 3 Pa·s
4: 3 Pa·s or greater and less than 4 Pa·s
3: 4 Pa·s or greater and less than 6 Pa·s
2: 6 Pa·s or greater and less than 8 Pa·s
1: 8 Pa·s or greater

[Electrode Coating Properties]

Negative electrode slurries (battery electrode compositions) with a solids content of 49 mass% were each prepared by mixing ingredients in a planetary mixer. The ingredients were 100 parts by mass of SiO (average particle size: 4.5 μm, specific surface area: 5.5 $m^2/g$) and graphite (average particle size: 18 μm, specific surface area: 3.2 $m^2/g$) (content ratio: 20/80) as negative electrode active materials; 0.2 parts by mass, on a carbon nanotube basis, of the carbon nanotube dispersion liquid (Examples 1 to 10 and Comparative Examples 1 to 6) and 1.0 parts by mass of acetylene black as conductive agents; 0.65 parts by mass, on a solids basis, of a 1.5 mass% aqueous solution of a sodium salt of carboxymethylcellulose (Cerogen BSH-6, manufactured by DKS Co., Ltd.) as a thickening agent; 3.5 parts by mass, on a solids basis, of an aqueous dispersion of a sodium salt of a polyurethane prepared in Synthesis Example P1, described below, as a binding agent; and ion-exchanged water. A 10 μm-thick electrolytic copper foil was used as a current collector. A negative electrode active material layer made of the negative electrode slurry was formed on the electrolytic copper foil. Specifically, the negative electrode slurry was coated onto the electrolytic copper foil with a coater, and the resultant was roll-pressed and subsequently dried under reduced pressure at 130°C. In this manner, a negative electrode with 7 to 8 $mg/cm^2$ of the negative electrode active material was obtained. The surface conditions at that time were observed and evaluated on a 5-point scale, described below, with the scores of 3 or more representing a "pass". 5: The color of the electrode surface is uniform, and neither recesses and projections due to aggregates nor striations cut into the electrode are observed.

4: A wavy striped pattern due to the coating material is observed, but neither recesses and projections due to aggregates nor striations cut into the electrode are observed, on the electrode surface.

3: Recesses and projections due to aggregates are observed, but striations cut into the electrode are not observed, on the electrode surface.
2: Recesses due to aggregates are observed, and striations cut into the electrode are also observed, on the electrode surface.
1: It is difficult to perform the coating.

Synthesis Example P1:

77.2 parts by mass of polybutadiene polyol (PolyVest HT, manufactured by Evonik Industries, average hydroxy number: 46.5 mgKOH/g, number of active hydrogen groups: 2.32), **3.0** parts by mass of dimethylolpropionic acid (number of active hydrogen groups: 2), 19.8 parts by mass of dicyclohexylmethane diisocyanate, and 150 parts by mass of methyl ethyl ketone were added to a four-neck flask equipped with a stirrer, a reflux condenser, a thermometer, and a nitrogen inlet tube. The contents were allowed to react at 75°C for 4 hours to afford a methyl ethyl ketone solution of a urethane prepolymer having a free isocyanate group content of 2.15 mass% based on the mass of non-volatile components. The solution was cooled to 45°C. While an aqueous solution of sodium hydroxide (0.89 parts by mass of sodium hydroxide and 300 parts by mass of water) was gradually added thereto, emulsification/dispersion was performed with a homogenizer. Subsequently, an aqueous solution obtained by diluting 1.6 parts by mass of diethylenetriamine (number of active hydrogen groups: 3) with 100 parts by mass of water was added, and a chain extension reaction was carried out for 1 hour. The resultant was subjected to solvent removal under heat at 50°C and reduced pressure to afford an aqueous polyurethane dispersion having a non-volatile content of approximately 32 mass%.

[Battery Performance (cycle characteristics)]

Preparation of Positive Electrode for Evaluation:

A positive electrode slurry was prepared as follows. 100 parts by mass of $LiNi_{1/3}Co_{1/3}Mn_{1/3}O_2$ (NCM), which is a positive electrode active material, 7.8 parts by mass of acetylene black (Li-400, manufactured by Denka Company Limited) as a conductive additive, 6 parts by mass of polyvinylidene fluoride as a binding agent, and 61.3 parts by mass of N-methyl-2-pyrrolidone as a dispersion medium were mixed together in a planetary mixer, and the mixture was adjusted to have a solids content of 65 mass%. The positive electrode slurry was coated onto a 15-μm thick aluminum foil with a coater. The resultant was dried at 130°C and subsequently roll-pressed. Thus, a positive electrode with 22 mg/$cm^2$ of the positive electrode active material was obtained.

Preparation of Lithium-Ion Secondary Battery:

The positive electrode, obtained as described above, and the negative electrode, prepared for the evaluation of electrode coating properties, were combined and laminated together with a separator, which was a polyolefin (PE/PP/PE)-based separator, disposed between the electrodes. A positive electrode terminal and a negative electrode terminal were ultrasonically welded to the positive electrode and the negative electrode, respectively. The laminate was placed in an aluminum laminated pouch, which was then heat-sealed, with an opening for electrolyte injection being left unsealed. Thus, a pre-electrolyte-injection battery with a positive electrode area of 18 $cm^2$ and a negative electrode area of 19.8 $cm^2$ was prepared. Next, an electrolyte solution was injected, the opening was then heat-sealed, and thus, a battery for evaluation was obtained. The electrolyte solution included $LiPF_6$ (1.0 mol/L) dissolved in a solvent, which was a mixture of ethylene carbonate and diethyl carbonate (volume ratio of 30/70).

Evaluation of Battery Performance:

A performance test for charge-discharge cycle characteristics at 20°C was conducted on the prepared lithium-ion secondary battery. The charge-discharge cycle characteristics were measured under the following conditions. CC (constant current) charging was performed at a current density corresponding to 0.5 C until 4.2 V; subsequently, the charging was switched to CV (constant voltage) charging at 4.2 V, and the charging was carried out for 1.5 hours; and subsequently, CC discharging was performed at a current density corresponding to 0.5 C until 2.7 V. This cycle was performed 300 times at 20°C. A 1 C charge-discharge cycle retention rate was determined as a ratio of a 1 C discharge capacity after 300 cycles to an initial 1 C discharge capacity. The cycle retention ratio at that time was evaluated on a 5-point scale, described below, with the scores of 3 or more representing a "pass".

5: The 1 C charge-discharge cycle retention rate is 95% or greater.
4: The 1 C charge-discharge cycle retention rate is 90% or greater and less than 95%.

3: The 1 C charge-discharge cycle retention rate is 80% or greater and less than 90%.
2: The 1 C charge-discharge cycle retention rate is 70% or greater and less than 80%.
1: The 1 C charge-discharge cycle retention rate is less than 70%.

[Table 1]

| | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| Formulation (parts by mass) | | | | | | | | | | | | | | | | |
| CNT-1 | 0.4 | 0.4 | 0.4 | | 0.4 | 0.4 | 0.4 | 0.4 | 0.8 | 0.4 | 0.4 | 0.4 | 0.4 | 0.4 | 0.4 | 0.4 |
| CNT-2 | | | | 2 | | | | | | | | | | | | |
| CMC-1 | 0.6 | | | | 0.6 | 0.6 | 0.8 | 0.5 | 1.2 | 0.6 | 0.6 | 0.6 | 0.6 | 0.6 | | 0.6 |
| CMC-2 | | 0.6 | | 1 | | | | | | | | | | | | |
| CMC-3 | | | 0.6 | | | | | | | | | | | | | |
| Compound D-1 | 3.13 | 3.13 | 3.13 | 3.13 | 6.26 | 0.78 | 3.13 | 3.13 | 6.26 | | | | | | 2.67 | |
| Compound D-2 | | | | | | | | | | 3.64 | | | | | | |
| Compound D-3 | | | | | | | | | | | 2.67 | | | | | |
| Compound D-4 | | | | | | | | | | | | 2.67 | | | | |
| Compound D-5 | | | | | | | | | | | | | 3.14 | | | |
| Compound D-6 | | | | | | | | | | | | | | 2.67 | | |
| Water | 95.87 | 95.87 | 95.87 | 93.87 | 92.74 | 98.22 | 95.67 | 95.97 | 91.74 | 95.36 | 96.33 | 96.33 | 95.86 | 96.33 | 96.93 | 99.00 |
| Total | 100 | 100 | 100 | 100 | 100 | 100 | 100 | 100 | 100 | 100 | 100 | 100 | 100 | 100 | 100 | 100 |
| Amount of Compound D (mol/CNT100-g) | 9.2 | 9.2 | 9.2 | 18 | 18.4 | 2.3 | 9.2 | 9.2 | 93 | 9.2 | 9.4 | 9.4 | 9.3 | 9.4 | 7.9 | 0 |
| Mass Ratio B/A | 1.5 | 1.5 | 1.5 | 0.5 | 1.5 | 1.5 | 2.1 | 1.3 | 1.6 | 1.5 | 1.5 | 1.5 | 1.5 | 1.5 | 0 | 1.5 |
| Mass Ratio D/(C+D) | 0.032 | 0.032 | 0.032 | 0.032 | 0.063 | 0.008 | 0.032 | 0.032 | 0.064 | 0.037 | 0.027 | 0.027 | 0.032 | 0.028 | 0.027 | 0 |
| Mass Ratio D/B | 5.2 | 5.2 | 5.2 | 3.1 | 10.4 | 1.3 | 3.9 | 6.3 | 5.2 | 6.1 | 4.5 | 4.5 | 5.2 | 4.5 | - | 0 |
| Mass Ratio (B+D)/(A+B+D) | 0.91 | 0.91 | 0.91 | 0.68 | 0.95 | 0.78 | 0.91 | 0.90 | 0.91 | 0.92 | 0.89 | 0.89 | 0.91 | 0.89 | 0.87 | 0.61 |
| Evaluations | | | | | | | | | | | | | | | | |
| Dispersibility | 5 | 5 | 5 | 5 | 5 | 4 | 5 | 4 | 5 | 4 | 3 | 2 | 1 | 1 | 2 | 2 |
| Dispersion Stability | 5 | 5 | 4 | 5 | 4 | 4 | 5 | 4 | 5 | 5 | 4 | 3 | 3 | 2 | 1 | 3 |
| Viscosity | 5 | 3 | 5 | 4 | 4 | 5 | 4 | 5 | 3 | 5 | 5 | 5 | 5 | 5 | 5 | 5 |

(continued)

| | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| Electrode Coating Properties | 5 | 4 | 5 | 5 | 4 | 5 | 5 | 5 | 5 | 5 | 4 | 4 | 4 | 2 | 1 | 3 |
| Battery Performance | 5 | 5 | 4 | 3 | 5 | 4 | 5 | 4 | 5 | 4 | 2 | 2 | 1 | 1 | 1 | 2 |

The results are as shown in Table 1. In Examples 1 to 10, compound D1 or D-2, which is the compound represented by formula (1), was used together with a CMC. Consequently, the carbon dispersibility and dispersion stability were excellent compared to Comparative Example 6, in which the CMC was used alone; in addition, the viscosity was low, and the electrode coating properties and battery performance were excellent.

In Comparative Example 5, the compound represented by formula (1) was used, but no CMC was included, and, consequently, the dispersibility and dispersion stability were poor. In Comparative Examples 1 to 4, a CMC was included, and compounds D-3 to D-6, which were an amide, a ketone, or an amine, were also respectively included; since compounds D-3 to D-6 were not the compound represented by formula (1), the dispersibility and/or dispersion stability were poor compared to Examples 1 to 10, and the battery performance was also insufficient

Regarding the various numerical ranges described herein, any of the upper limits and any of the lower limits can be combined, and all of such combinations are to be understood as being described herein as preferred numerical ranges. Regarding numerical ranges, the expression **"X to Y"** means X or greater and Y or less.

Some embodiments of the present invention have been described above. The embodiments have been presented as examples and are not intended to limit the scope of the invention. The embodiments can be implemented in various other forms. Various omissions, substitutions, and changes can be made thereto without departing from the spirit of the invention. The embodiments, as well as omissions, substitutions, changes, and the like that may be made thereto, are encompassed by the scope and spirit of the invention and encompassed by the scope of the invention described in the claims and equivalents thereof.

## Claims

1. A carbon nanotube dispersion liquid comprising:

   a carbon nanotube;
   carboxymethyl cellulose and/or a salt thereof;
   water; and
   a compound represented by general formula (1) below:

   [Chem. 1]

   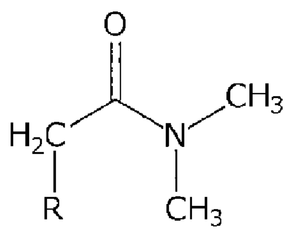

   (1)

   where R represents a hydrogen atom or a methyl group.

2. The carbon nanotube dispersion liquid according to Claim 1, wherein the carboxymethyl cellulose and/or the salt thereof have a degree of etherification of 0.60 to 0.85 and a 2 mass% aqueous solution viscosity at 25°C of 1 to 300 mPa·s.

3. The carbon nanotube dispersion liquid according to Claim 1, wherein a content of the compound is 1 to 30 moles per 100 g of the carbon nanotube.

4. The carbon nanotube dispersion liquid according to Claim 1, wherein a ratio of an amount of the carboxymethyl cellulose and/or the salt thereof to an amount of the carbon nanotube is 0.3 to 3.0 on a mass basis.

5. The carbon nanotube dispersion liquid according to Claim 1, wherein a ratio of an amount of the compound to a total amount of the compound and the water is 0.005 to 0.1 on a mass basis.

6. A battery electrode composition comprising the carbon nanotube dispersion liquid according to any one of Claims 1 to 5.

**7.** A battery electrode produced with the battery electrode composition according to Claim 6.

**8.** A battery comprising an electrode produced with the carbon nanotube dispersion liquid according to any one of Claims 1 to 5.

## INTERNATIONAL SEARCH REPORT

International application No.
**PCT/JP2023/038425**

**A. CLASSIFICATION OF SUBJECT MATTER**

***C01B 32/174***(2017.01)i; ***C08K 3/04***(2006.01)i; ***C08K 5/20***(2006.01)i; ***C08L 1/26***(2006.01)i; ***D01F 9/12***(2006.01)i; ***H01M 4/62***(2006.01)i
FI: C01B32/174; C08K3/04; C08K5/20; C08L1/26; D01F9/12; H01M4/62 Z

According to International Patent Classification (IPC) or to both national classification and IPC

**B. FIELDS SEARCHED**

Minimum documentation searched (classification system followed by classification symbols)

C01B32/158-178; C08K3/04; C08K5/20; C08L1/26; D01F9/12; H01M4/00-4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 2014-152296 A (ZEON CORP.) 25 August 2014 (2014-08-25) claims, paragraphs [0001], [0025], [0035], [0061] | 1-8 |
| Y | JP 2016-172823 A (OSAKA GAS CO., LTD.) 29 September 2016 (2016-09-29) paragraphs [0100], [0124] | 1-8 |
| Y | JP 2015-168610 A (AKITA UNIVERSITY) 28 September 2015 (2015-09-28) paragraphs [0062]-[0064] | 1-8 |
| Y | JP 2021-176140 A (TOYO INK SC HOLDINGS CO., LTD.) 04 November 2021 (2021-11-04) claims, paragraph [0042], examples 1-A17 | 2, 6-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 December 2023** | **09 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/038425**

| Patent document cited in search report | Publication date (day/month/year) | Patent family member(s) | Publication date (day/month/year) |
|---|---|---|---|
| JP 2014-152296 A | 25 August 2014 | (Family: none) | |
| JP 2016-172823 A | 29 September 2016 | (Family: none) | |
| JP 2015-168610 A | 28 September 2015 | (Family: none) | |
| JP 2021-176140 A | 04 November 2021 | US 2023/0187644 A1<br>claims, paragraph [0066], examples 1-A17<br>EP 4145553 A1<br>CN 115461898 A<br>KR 10-2023-0007337 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014181140 A